# EUROPEAN PATENT SPECIFICATION

(11) **EP 1 054 194 B1**
(45) Date of publication and mention of the grant of the patent: **09.02.2005**
(21) Application number: 00109612.2
(22) Date of filing: 05.05.2000
(51) Int. Cl.: F16H 61/02

(54) **A transmission control apparatus**
Getriebesteuerung
Dispostif de commande de transmission

(30) Priority: 18.05.1999 JP 13769199
(43) Date of publication of application: 22.11.2000
(73) Proprietor: HONDA GIKEN KOGYO KABUSHIKI KAISHA, Minato-ku Tokyo (JP)
(72) Inventor: Takahashi, Tsukasa, Wako-shi, Saitama (JP); Kawahara, Eiichiro, Wako-shi, Saitama (JP); Naraki, Tetsuo, Wako-shi, Saitama (JP); Matsubara, Chihiro, Wako-shi, Saitama (JP)
(74) Representative: Prechtel, Jörg, Dipl.-Phys. Dr.

(56) References cited:
- DE-A- 19 608 214
- US-A- 5 097 726
- US-A- 5 733 222

## Description

### BACKGROUND OF THE INVENTION

### 1. Field of the Invention

The present invention relates to a transmission system and a method for conducting a gear change of such a transmission system, corresponding to the preamble of claims 1 and 9.

### 2. Description of the Related Art

An example of such a transmission is described on the closest prior art document JP8338486A (& US 5733222A).

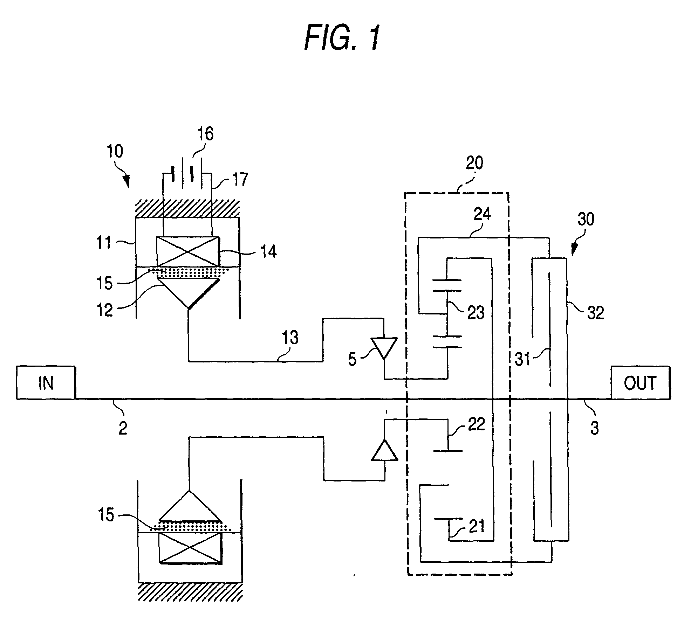

That has the same mechanical structure as the present invention has and, in an embodiment thereof (see Fig. 1 for an embodiment of the invention), a ring gear 21 of a planetary gear set 20 is so linked to an input shaft as to form a single piece and is also so linked to one rotary member 31 of the oil hydraulic clutch 30 as to form a single piece while a sun gear 22 is linked to a rotor 13 of the magnetic-particle-type electromagnetic brake (electromagnetic brake) 10 via a one-way clutch 5. A planetary gear 23 is linked to the other rotary member 32 of the oil hydraulic clutch 30 via a carrier 24 and the rotary member 32 is linked to an output shaft 3.

When the electromagnetic brake 10 is engaged while the oil hydraulic clutch 30 is disengaged, the first speed range is selected to effect low-speed rotations of the output shaft 3 and, when the electromagnetic brake 10 is disengaged while the oil hydraulic clutch 30 is engaged, the second speed range is selected to effect high-speed rotations of the output shaft 3.

At the gear change from the second speed range to the first speed range, the oil hydraulic clutch 30 is disengaged but, in case of delay in the engagement of the electromagnetic brake 10, an abrupt loss of load causes the engine to blow up.

Additionally, in case of an imperfect engagement of the electromagnetic brake 10, disengagement of the oil hydraulic clutch 30 is liable to cause the engine to blow up.

### SUMMARY OF THE INVENTION

The present invention, considering such problems as described above, is purposed to provide a control apparatus for the transmission that enables prevention of blowing up at the engine when at the time of gear change.

For achievement of the above-described purposes, the invention provides the features of claims 1 and 9.

Further details of the invention are outlined in the depended claims.

The transmission system ensures that the brake control means causes engagement of the brake before disengagement of the clutch when the gear change predicting means predicts a gear change from the second speed range to the first speed range.

On prediction of the gear change from the second speed range to the first speed range by the gear change predicting means, the brake is engaged before the disengagement of the clutch, and thus the blow-up at the engine is prevented without fail since the brake has already been engaged when the clutch is disengaged.

The transmission system ensures that the gear change predicting means predicts a gear change, based on vehicle velocities and throttle valve opening rates.

The engagement of the brake on prediction of the gear change by the gear change predicting means before the clutch is operated to change the gears, based on the vehicle velocities and the throttle valve opening rates, enables prevention of the blow-up at the engine.

The transmission system ensures that the gear change predicting means predicts a gear change, based on engine revolving speeds.

The gear change can be predicted by the gear change predicting means, based on the engine revolving speeds that change before the vehicle velocities that are the gear change parameters, and thus the engagement of the brake on the prediction enables prevention of the blow-up at the engine. The transmission system ensures that the brake control means is a magnetic-particle-type electromagnetic brake that is enabled to fasten a rotary member onto the stationary member through control of energization amount when an exciting coil provided on the stationary element is energized.

The magnetic-particle-type electromagnetic brake, having an exciting coil on either the outer member side or the inner member side that rotate relatively, carries out the torque transmission with formation of magnetic particle chains through magnetization of the magnetic particles of the electromagnetic powder that intervenes between the outer member and the inner member when a magnetic field is generated by electrification of the exciting coil.

Regulation of the electrification amount for electrification of the exciting coil on the magnetic-particle-type electromagnetic brake enables smooth and immediate engagement and disengagement of the brake through transmission torque control by changing an intensity of the magnetic field.

The transmission system ensures that a heavy load determining means for determination of a heavy load state at an engine for supply of drive force to the input member is provided and that the brake control means so controls with priority as to prohibit disengagement of the brake on determination of the heavy load state by the heavy load determining means.

When the engine is in the heavy load state, since the brake operations may happen to delay behind a change in the engine torque, prohibition of the brake disengagement for maintenance of the engagement state with priority enables prevention of the blow-up at the engine without fail.

The transmission system ensures that the brake control means so controls as to engage the brake on determination of the heavy load state in the engine by the heavy load determining means in the course of disengagement of the brake.

Since the heavy load state at the engine can cause delay in the brake operations behind a change in the engine torque, the engagement of the brake, in case the brake is in the course of disengagement, enables prevention of the blow-up at the engine without fail.

### BRIEF DESCRIPTION OF THE DRAWINGS

Fig. 1 shows an outlined structure of a two-speed gear transmission related to an embodiment of the invention;
Fig. 2 shows an outlined block diagram of a control system for automotive transmission that incorporates the same two-speed-ranged transmission;
Fig. 3 shows a gear change map;
Fig. 4 is a flowchart to show operational controls of the electromagnetic brake;
Fig. 5 is a diagrammatic chart to show controls of the electromagnetic brake, which is related to another mode of embodiment;
Fig. 6 is a flowchart for the same controls;
Fig. 7 shows a gear change map at the time of speed-increasing gear shifts for the four-gear transmission; and
Fig. 8 shows a gear change map at the time of speed-decreasing gear shifts for the same.

### DETAILED DESCRIPTION OF THE PREFERRED EMBODIMENTS

With references to Figs. 1 through 4, a mode of embodiment pertaining to the present invention is now described.

This embodiment is an example of a two-speed gear transmission that is equipped with a combination of a magnetic-particle-type brake 10 and a planetary gear set 20.

The magnetic-particle-type brake 10 has a fixed stationary outer member 11 and an inner member 12 that is fitted on a rotor 13 and is disposed inside the outer member 11 in such manner as to rotate freely.

An exciting coil 14 that is wound in the circumferential direction is housed inside the circumferential wall of the outer member 11, and electromagnetic powder 15 intervenes between the outer member 11 and the inner member 12.

Electric power is supplied to the exciting coil 14 on the stationary side from the electric power source 16 through the electric power line 17.

In the planetary gear set 20, a ring gear 21 is so linked to an input shaft 2 as to form a single piece and also so linked to one rotary member 31 of an oil hydraulic clutch 30 as to form a single piece while a sun gear 22 is linked to the rotor 13 of the magnetic-particle-type electromagnetic brake 10 via a one-way clutch 5.

The planetary gear 23 is linked to another rotary member 32 of the oil hydraulic clutch 30 via a carrier 24 and the rotary member 32 is so linked to an output shaft 3 as to form a single piece.

In the transmission 1 that has a structure as described above, so long as both the magnetic-particle-type electromagnetic brake 10 and the oil hydraulic clutch 30 are disengaged, both the inner member 12 of the magnetic-particle-type electromagnetic brake 10 and sun gear 22 that links to the inner member 12 rotate freely, wherein, although the rotative force of the input shaft 2 rotates the ring gear 21, rotations of the ring gear 21 are transmitted to the load-less and freely-rotating sun gear 22 via the planetary gear 23 and the sun gear 22 idles, revolving reverse with the rotor 13, via the one-way clutch 5.

Therefore, the planetary gear 23 rotates on its own axis and does not revolve to orbit, and thus the motive power is not transmitted to the output shaft 3 via the carrier 24 and the rotary member 32 of the oil hydraulic clutch 30 to remain in a neutral state.

With the exciting coil 14 on the magnetic-particle-type electromagnetic brake 10 energized in this state, a magnetic field is generated to effect magnetization and chaining of the magnetic particles of the electromagnetic powder and, when the inner member 12 is finally linked to the outer member 11 on the stationary side, the inner member 12 is fastened together with the rotor 13 so that the sun gear 22 is prohibited from reverse rotations via the one-way clutch 5.

The rotative force of the input shaft 2 causes the ring gear 21 to rotate, and the planetary gear 23, rotating on its own axis, revolves between the ring gear 21 and the sun gear 22 that is prohibited from reverse rotations and rotates the carrier 24 to effect low-speed rotations of the output shaft 3, incorporating the rotary member 32 of the oil hydraulic clutch 30.

When the oil hydraulic clutch 30 enters the engagement state, the planetary gear set 20 is enabled to rotate as a whole planetary gear set 20 wherein the ring gear 21 and the carrier 24 are linked to form a single piece while the rotative force of the input shaft 2 effects high-speed rotations of the output shaft 3, incorporating the planetary gear set 20 that is separated by the one-way clutch 5, since the input shaft 2 is directly linked to the output shaft 3.

As described above, the two-speed gear transmission 1 according to the invention can form two speed ranges, which are the low-speed range and the high-speed range besides the neutral.

Use of the magnetic-particle-type electromagnetic brake 10 enables fast and smooth transition from the neutral state to the low-speed range or to the high-speed range.

As for the electric power supply to the exciting coil 14, since the outer member 11 of the magnetic-particle-type electromagnetic brake 10 is fastened to be in the stationary state and the exciting coil 14 is disposed on the outer member 11, the electric power is supplied from the electric power source 16 to the exciting coil 14 directly through the electric power line 17, which requires no electric contact parts that intervene in the electric power line 17, such as a slip ring and a brush.

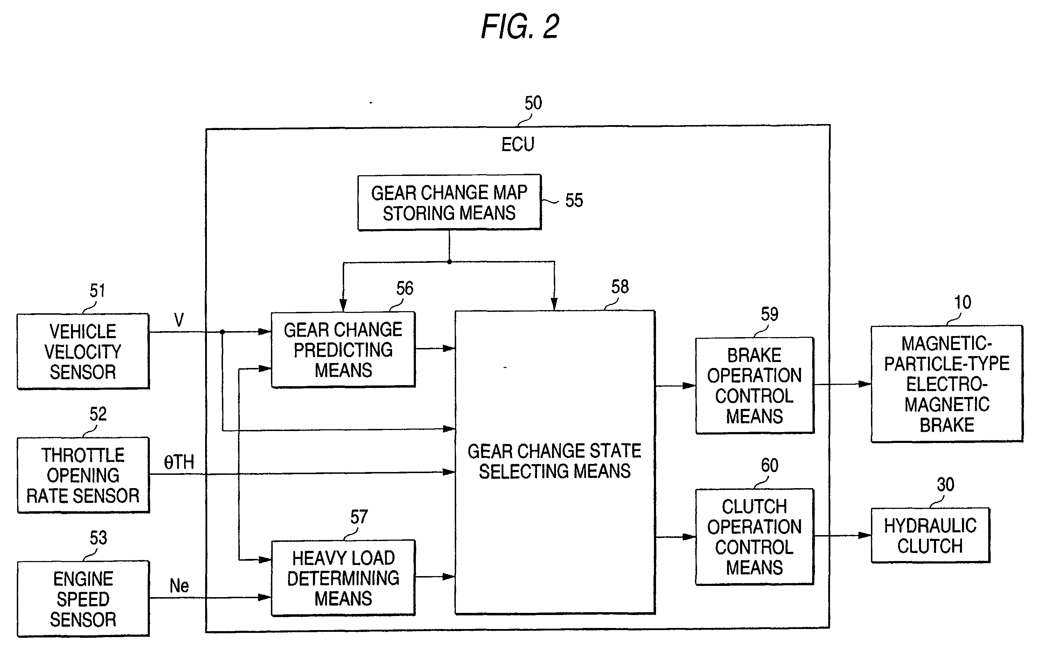

Fig. 2 shows a simplified block diagram of a control system for an automotive transmission that incorporates the above-described two-speed gear transmission 1 in a drive range thereof.

The control of the transmission is carried out by an electronic control unit ECU 50; after detected vehicle velocity values V from a vehicle velocity sensor 51, detected throttle valve opening rate values θ th from a throttle valve opening sensor 52 and detected engine revolving speed values NE are respectively input to the ECU 50 and processed, operating command signals are output to the electromagnetic brake 10 and oil hydraulic clutch 30 to carry out the gear change control.

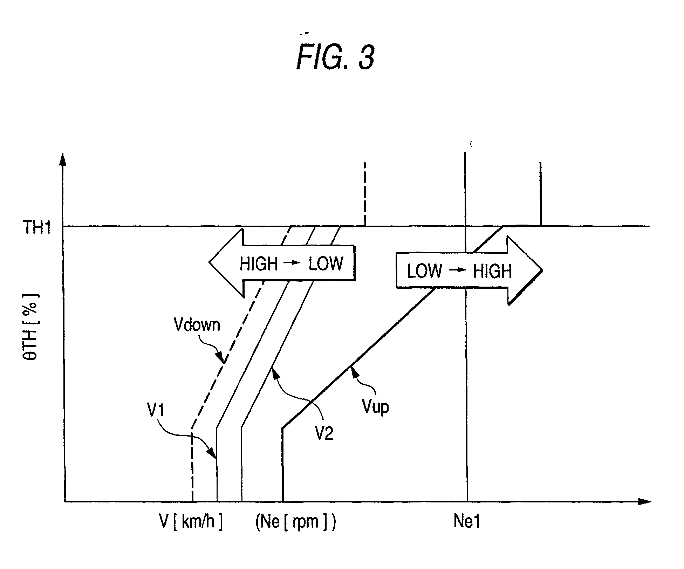

The ECU 50 comprises a gear change map storing means 55 for storage of gear change maps in advance. Fig. 3 shows a gear change map that is stored by the gear change map storing means 55 (a map wherein gear change positions are designated in advance, according to the vehicle velocities and throttle valve opening rates or accelerator opening rates).

The vehicle velocity V (Km/h) and the engine revolving speed (rpm) are expressed on the horizontal axis while the throttle valve opening rates θ th (%) are expressed on the vertical axis in the map, wherein a polygonal line Vup (gear change line) shows a threshold value at a speed-increasing gear shift from a low-speed range to a high-speed range while a polygonal line Vdown (gear change line) shows a threshold value at a speed-decreasing gear shift from a high-speed range to a low-speed range, and the oil hydraulic clutch 30 is controlled with reference to the lines Vup and Vdown.

When the vehicle velocity V and the throttle valve opening rate θ th change to pass the line Vup from the left to the right, the oil hydraulic clutch 30 is engaged for speed-increasing gear shift from the low-speed range to the high-speed range and, when they pass the line Vdown from the right to the left, the oil hydraulic clutch 30 is disengaged for speed-decreasing gear shift from the high-speed range to the low-speed range.

The line V1 and the line V2 on the high vehicle velocity side (the right-hand side) of the line Vdown are threshold values for the electromagnetic brake 10 (gear change prediction lines), where the electromagnetic brake 10 is engaged in advance with prediction of the speed-decreasing gear shift before the speed-decreasing gear shift at disengagement of the oil hydraulic clutch 30, when the vehicle velocity V and the throttle valve opening rate θ th change to shift from the right to the left.

The vehicle velocity is in the relationship of Vdown < V1 < V2 < Vup, and each of the lines are preliminarily set up on the map.

The throttle valve opening rate TH1 in Fig. 3 is a predetermined high throttle valve opening rate (for example, 75%) and the engine revolving speed Ne1 is a predetermined high engine revolving speed (for example, 5,000 rpm).

The gear change map storing means 55 in the ECU 50 stores the above-described gear change map.

As shown in Fig. 2, the ECU 50 includes a gear change predicting means 56, and the gear change predicting means 56 predicts gear changes with reference to the vehicle velocity V and the throttle valve opening rate θ th on the gear change map.

That is, whether transition of the vehicle velocity V and the throttle valve opening rate θ th from the right to the left passes the gear change prediction line V1 or V2 or not is determined to predict the gear change, and the prediction results are input to the gear change state selecting means 58.

The ECU 50 includes also a heavy load determining means 57, and the heavy load determining means 57 determines whether a heavy load state is present or not, with reference to the throttle valve opening rates θ th or the engine revolving speeds Ne. That is, whether the throttle valve opening rate θ th exceeds the high throttle valve opening rate TH1 or not, or whether the engine revolving speed Ne exceeds the high engine revolving speed Ne1 or not is determined.

The results of determination by the high load determining means 57 are also input to the gear change state selecting means 58.

The gear change state selecting means 58 selects the gear change state, based on the results of prediction by the gear change predicting means 56 and the results of determination by the heavy load determining means 57, also selecting the gear change state, based on the vehicle velocity V and the throttle valve opening rate θ th with reference to the gear change map, and then outputs command signals to a brake operation control means 59 and a clutch operation control means 60.

Based on the command signals, operations of the electromagnetic brake 10 are controlled by the brake operation control means 59 and operation of the oil hydraulic clutch 30 are controlled by the clutch operation control means 60.

The oil hydraulic clutch 30 is controlled as described above, based on the lines Vup and Vdown which are the gear change lines on the gear change map in Fig. 3.

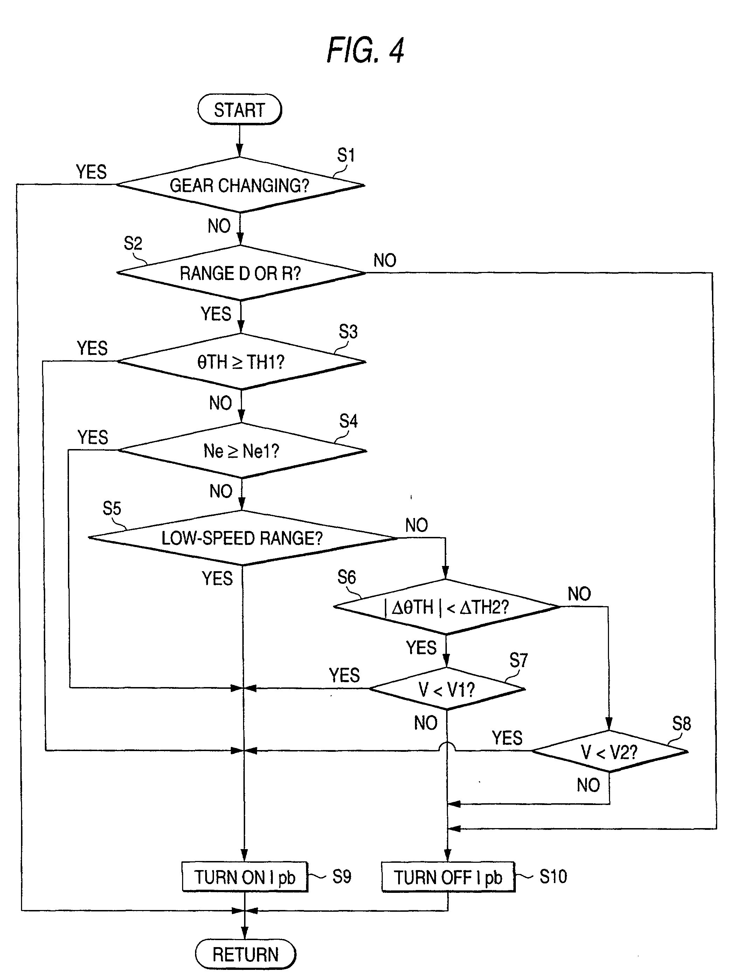

Operations of the electromagnetic brake 10 are controlled in compliance with a flowchart in Fig. 4.

On reference to the flowchart, whether the gears are being changed or not is determined first (step S1), and the control is cancelled in case the gears are in the course of change, but the sequence proceeds to step S2 in case the gear change has been completed, whereat whether the selected shift range is D (drive) or R (rear) is determined; the sequence jumps to step S10 in case the selected range is neither DRIVE nor REAR, whereat, after flow of electric current Ipb to the electromagnetic brake 10 is shut off, the electromagnetic brake 10 is disengaged.

In case the shift range selected at step S2 is either D (drive) or R (rear), the sequence proceeds to step S3, whereat whether the throttle valve opening rate θ th is in the heavy load state of the high throttle valve opening rate TH1 or higher is determined. In case in the heavy load state, the sequence proceeds to step S9 whereat electric current Ipb is supplied to the electromagnetic brake 10 to cause the electromagnetic brake 10 to be engaged.

In case the throttle opening rate θ th at step S3 is less than the high throttle valve opening rate TH1, the sequence proceeds to step S4 to determine whether the engine revolving speed Ne is in the heavy load state of the high engine revolving speed Ne1 or higher or not. In case of the heavy load, the sequence jumps to step S9 for flow of the electric current Ipb to cause the electromagnetic brake 10 to be engaged.

That is, since whether the engine is in the heavy load state or not is determined from the throttle valve opening rate θ th and the engine revolving speed Ne at steps S3 and S4 so that the electromagnetic brake 10 will be engaged by electrification of the electromagnetic brake 10 in case the heavy load state is present, engine blow-up that results from delay in the control torque for the electromagnetic brake 10 behind the engine torque transition can be effectively prevented.

In case the heavy load state is not present, the sequence proceeds from step S4 to step S5 to determine whether the low-speed range is selected or not.

In case the low-speed range is selected, the sequence proceeds to step S9, whereat the electric current Ipb is supplied to the electromagnetic to maintain the engagement state of the electromagnetic brake 10.

On determination that the low-speed range is not selected, the sequence proceeds to step S6, whereat whether absolute value of time rate Δ θth (change amount per second) of the throttle valve opening rate θ th is smaller than a predetermined change rate Δ TH2 (for example, 30%) or not is determined.

That is, whether the change of the throttle valve opening rate is small or great or not is determined.

In case the change in the throttle valve opening rate is small, the sequence proceeds to step S7, whereat whether the vehicle velocity V is smaller than V1 or not (whether the vehicle velocity V is on the left side of the line V1 that is the gear change prediction line or not) is determined. In case it is smaller, with prediction of a gear change on an approach to the line Vdown whereon the vehicle velocity V changes from the high-speed to the low-speed while in the high-speed range, the sequence proceeds to step S9 whereat electric current Ipb is supplied to the electromagnetic brake 10 to effect the engagement of the electromagnetic brake 10.

In case the vehicle velocity V is greater than V1, the sequence proceeds to step S10, whereat supply of the electric current Ipb is shut off with determination that a gear change has not been predicted yet and disengagement of the electromagnetic brake 10 is effected.

On determination that the change of the throttle valve opening rate θth is large (|Δ θ th|≥ Δ TH2) in Step S6, the sequence proceeds to step S8 whereat whether the vehicle velocity V is smaller than V2 (whether the vehicle velocity V is on the left side of the gear change prediction line V2 in the gear change map in Fig. 3 or not) is determined. In case it is smaller, with prediction of a gear change on an approach to the line Vdown whereon the vehicle velocity V changes from the high-speed to the low-speed, while in the high-speed range, the sequence proceeds to step S9 whereat electric current Ipb is supplied to the electromagnetic brake 10 to effect the engagement of the electromagnetic brake 10.

In case the vehicle velocity V is greater than V2, the sequence proceeds to step S10, whereat supply of the electric current I pb is shut off with determination that a gear change has not been predicted yet and disengagement of the electromagnetic brake 10 is effected.

In case the change in the throttle valve opening rate θth is great, a fast approach to the line Vdown whereon the vehicle velocity V changes from the high-speed to the low-speed while in the high-speed range can be predicted, the engagement of the electromagnetic brake 10 is effected further in advance with the line V2 as the gear change prediction line, which lies in the zone closer to the front (the right-hand side) than the line V1 in the gear change map.

Since the low-speed range has been selected after the engagement of the electromagnetic brake 10 and the succeeding engagement of the oil hydraulic clutch 30, the sequence jumps from step S5 to step S9 whereat the electrification of the electromagnetic brake 10 is maintained and the engagement state is held.

As described above, since the electromagnetic brake 10 is engaged before disengagement of the oil hydraulic clutch 30 when the gear change from the high-speed to the low-speed range is predicted, based on the gear change prediction lines V1 and V2 in the gear change map, the engagement of the electromagnetic brake 10 is effected without fail when the oil hydraulic clutch 30 is disengaged and thus the blow-up at the engine is prevented.

In a case of transition from the low-speed to the high-speed range, the sequence proceeds from step S5 to step S6 on gear change to the high-speed range with the engagement of the oil hydraulic clutch 30. Then, since the electric current flow to the electromagnetic brake 10 is shut off only after the vehicle velocity V enters the right-hand side of the line V1 or the line V2 at step S7 or at step S8, electric flow to the electromagnetic brake 10 can be shut off only after simplified confirmation of the full engagement of the oil hydraulic clutch 30.

The electric current flow to the electromagnetic brake except in the low-speed range is shut off to thereby effect improvement in the fuel cost.

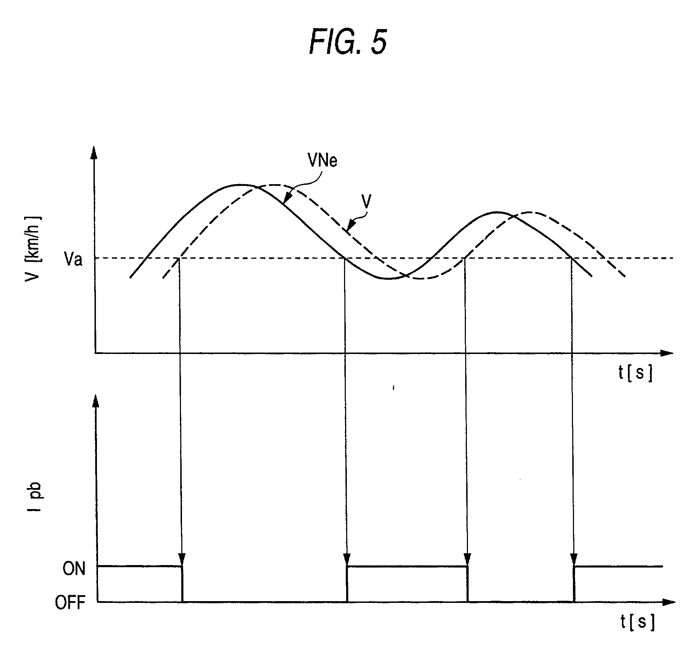

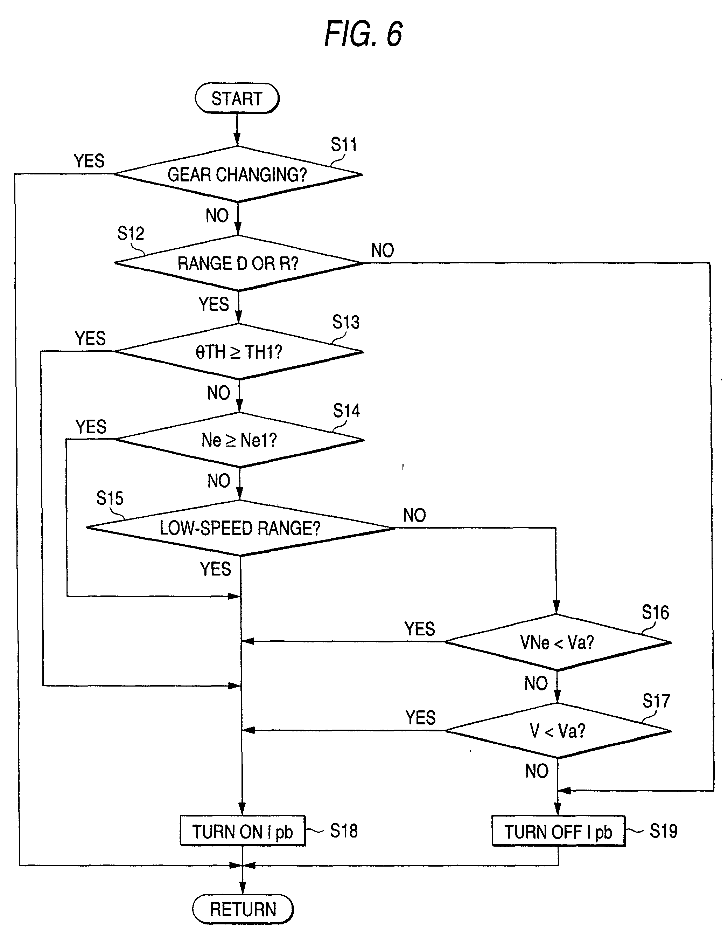

Although the above-described mode of embodiment controls the electromagnetic brake 10 with prediction of gear change from the high-speed to the low-speed range, which is based on the gear change prediction lines that are drawn in advance on the gear change map, another method for control of the electromagnetic brake 10 with gear change prediction is described now with references to Figs. 5 and 6.

This mode of embodiment uses calculated vehicle velocity values VNe for gear change prediction, which are obtained from such as gear ratios by calculations based on the engine revolving speed Ne.

The calculated vehicle velocity values VNe are based on the engine revolving speed Ne and thus any change in the vehicle velocity becomes apparent before the vehicle velocity values V that are detected by the vehicle velocity sensor 51.

The upper part of the chart in Fig. 5 is an example to show the state described above, wherein the calculated vehicle velocity value Vne changes before the vehicle velocity V. The lower part of the chart in Fig. 5 shows the "on" and "off" states of the electromagnetic brake 10 of the example shown in the upper part of the chart.

A flowchart in Fig. 6 shows the control procedures of the electromagnetic brake 10.

Steps S11 through S15 in this flowchart are the same as steps S1 through S5 on the flowchart in above-described Fig. 4 and steps S18 and S19 correspond to the above-described steps S9 and S10.

In case it is determined at step S15 that a low-speed range is not selected, the sequence proceeds to step S16, whereat whether calculated vehicle velocity value VNe is smaller than the predetermined vehicle velocity value Va or not is determined. In case it is smaller, with prediction of change in vehicle velocity V by range change from the high-speed to the low-speed, the sequence proceeds to step S18 whereat electric current Ipb is supplied to the electromagnetic brake 10 for engagement of the electromagnetic brake 10.

In case the calculated vehicle velocity value VNe is larger than the predetermined vehicle velocity value Va, the sequence proceeds to step S17, whereat whether the vehicle velocity V is smaller than the vehicle velocity value Va or not is determined. While it is smaller, the sequence proceeds to step S18 whereat the engagement of the electromagnetic brake 10 is maintained, but, in case the vehicle velocity V become larger than the vehicle velocity value Va, the sequence proceeds to step S19 whereat, for the first time, flow of electric current Ipb to the electromagnetic brake 10 is shut off to effect disengagement of the electromagnetic brake 10.
As described above, in case where a gear change from the high-speed range to the low-speed range is predictable based on the calculated vehicle velocity value VNe, the electromagnetic brake 10 is engaged before disengagement of the oil hydraulic clutch 30. Thus, the engagement of the electromagnetic brake 10 is secured before the oil hydraulic clutch 30 is disengaged, to thereby prevent the blow-up at engine.

On the other hand, at transition from the low-speed range to the high-speed range, the sequence proceeds from step S15 to step S16 on gear change to the high-speed range with the engagement of the oil hydraulic clutch 30 and then, shut-off of the electric current flow to the electromagnetic brake 10 is effected only after the vehicle velocity V becomes larger than the predetermined vehicle velocity value Va at step S17. Accordingly, the electric current flow to the electromagnetic brake 10 is shut off after simplified confirmation of the full engagement of the oil hydraulic clutch 30.

Although the above-described modes of embodiments relate to the two-speed gear transmission, it is also possible to include another set of planetary gear set at a rear range of the present planetary gear set for the two-speed gear transmission so as to comprise a clutch that can engage and disengage an input shaft and an output shaft of the rear-range set to provide a four-speed-ranged transmission, which includes a first speed range of low-speed range for the front and rear ranges, a second speed range of one high-speed range for the front range and one low-speed range for the rear range, a reversal third speed range of one low-speed range for the front range and one high-speed range for the rear range and a fourth speed range of high-speed ranges respectively for the front and rear ranges.

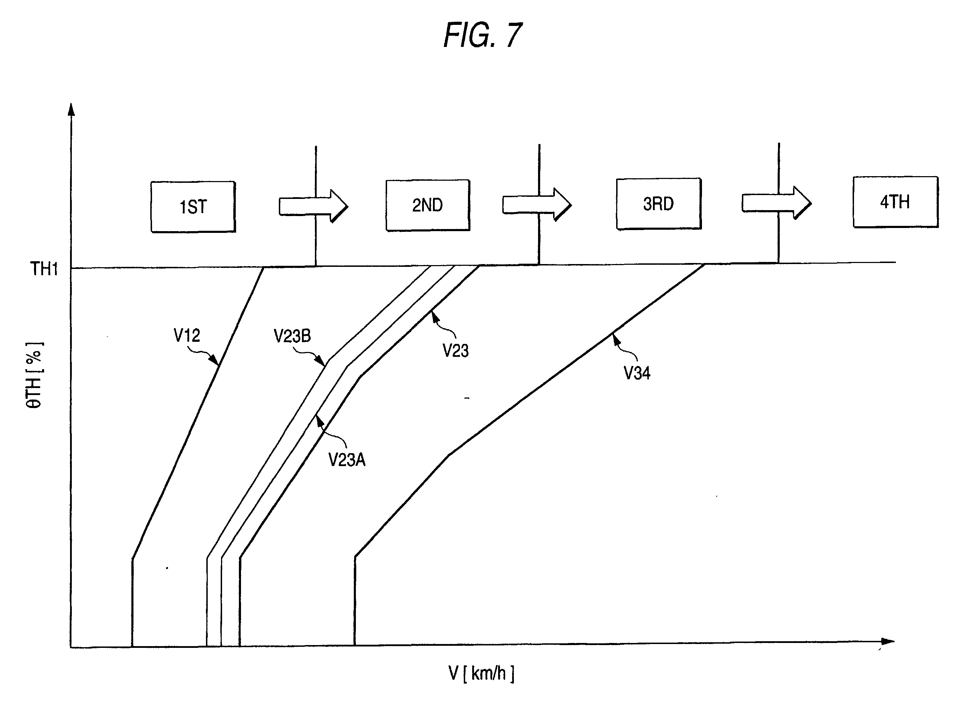

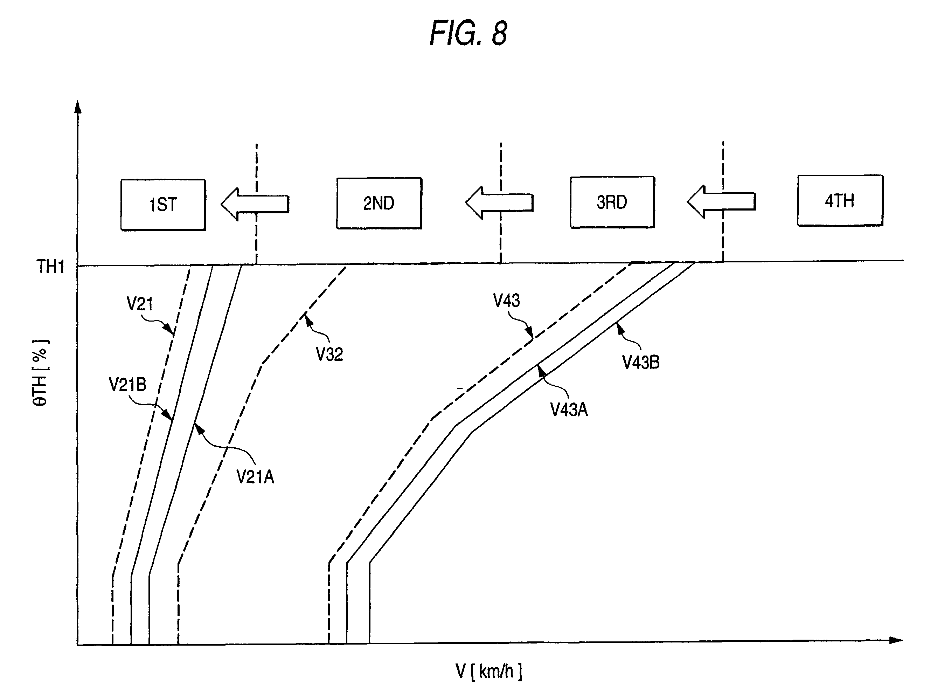

Figs. 7 and 8 show gear change maps for the four-gear transmission.

Fig. 7 is a gear change map at the time of speed-increasing gear shift, wherein set up are lines V12, V23 and V34 respectively for gear changes, from the first speed range to the second speed range, from the second speed range to the third speed range and from the third speed range to the fourth speed range. At the speed-increasing gear shift from the second speed range of the high-speed range to the third speed range of the low-speed range at the front range, gear change prediction line V23A and V23B are set up in advance in front (low-vehicle-velocity side) of the gear change line.

Therefore, at the gear change from the second speed range to the third speed range, an advanced electrification of the electromagnetic brake 10 to effect the engagement state in case where a gear change with the vehicle velocity V beyond the lines V23A and V23B is predicted enables prevention of the engine blow-up.

On the other hand, at the time of speed-decreasing gear shift from the high-speed gear range to the low-speed gear range at the front range, which includes speed-decreasing gear shifts from the fourth speed range to the third speed range and from the second speed range to the first speed range, as shown in Fig. 8, the gear change prediction lines V43A and V43B and the gear change prediction lines 21A and 21B are drawn respectively before (on the high vehicle velocity side of) the gear change lines V43 and V21 in advance.

In case where speed-decreasing gear shifts of the vehicle velocity V beyond these gear change prediction lines from the fourth speed range to the third speed range and also from the second speed range to the first speed range are predicted, an advanced electrification of the electromagnetic brake 10 to effect the engagement state enables prevention of the engine blow-up.

Shut-off of the electric current flow Ipb to the electromagnetic brake at the second and fourth speed ranges wherein the front range is in the high-speed range enables improvement in the fuel cost.

As described above, a simplified control of the four-gear transmission, where the electromagnetic brake is disengaged only in the fourth speed range (not disengaged in the second speed range), is also available.

Besides the above-described two-speed gear transmission with use of the planetary gear, also possible is a structure wherein ring gear is linked to the electromagnetic brake via the one-way clutch, with a sun gear as the input and the carrier that is linked to the planetary gear as the output, so that the input and the output are engaged and disengaged by the oil hydraulic clutch.

Also in this structure, since the electromagnetic brake is engaged but the oil hydraulic clutch is disengaged in the low-speed range whereas both the electromagnetic brake and the oil hydraulic clutch are engaged in the high-speed range, the advanced engagement of the electromagnetic brake on prediction of the speed-decreasing gear shift enable prevention of the engine blow-up.

Although the electromagnetic brakes that are involved in the above described modes of embodiment are the magnetic-particle-type electromagnetic brakes, the brake apparatus is not limited to the above but non-magnetic-particle-type electromagnetic brakes, oil hydraulic brakes (dry-type, wet-type, single-plate-type and multi-plate-type are also available) and pneumatic brakes can also be used.

In the case of an oil-hydraulic-control-type band brake, however, it is possible to improve the fuel cost by varying the oil pump capacity through on-off switching of the oil pressure, but, since the control of the variable pump requires varying of the oil pump capacity in synchronism, as well as the above-described brake control; considering all that are described above, the use of the electromagnetic brake is the simplest to control and the greatest to effect.

The oil hydraulic clutch may be replaced by an electromagnetic clutch.

Additionally, as disclosed in the Japanese national stage publication of international application No. Hei.6-505082, the use of a mechanical-type automatic transmission that engages and disengages the clutch with use of a thrust force of a helical gear and a depressing pressure of a centrifugal weight makes it difficult to predict the actual gear changes.

That is, since it is necessary to predict a balance between the depressing force of the centrifugal weight that depends on the revolving speed and the thrust force of the helical gear that is based on the engine-side torque, the gear changes cannot be predicted simply from such as the vehicle velocity and the throttle valve opening rate.

As described above, however, such a control as to maintain the electric current flow to the electromagnetic brake to effect the engagement state at the heavy-load time is extremely effective in prevention of a shock from happening.

Additionally, a determining means for determination of up-slopes and down-slopes may be provided to effect the maintenance of the brake engagement state with a prediction of frequent gear changes in case of determination on travelling over an up-slope or a down-slope.

## Claims

1. Transmission system, comprising
- a planetary gear set (20), including a sun gear (22), a planetary gear (23), and a ring gear (21) as gear elements (21, 22, 23),
- a brake (10) having a stationary member (11, 14) and a rotary member (12, 13), said brake (10) being operable between a brake engagement condition in which said rotary member (12, 13) is stopped and a brake disengagement condition in which said rotary member (12, 13) is free to rotate,
- a clutch (30) having a first clutch member (31) fixedly connected to a transmission input shaft (2), and a second clutch member (32) fixedly connected to a transmission output shaft (3), said clutch (30) being operable between a clutch engagement condition in which said first and second clutch members (31, 32) are coupled for common rotation, and a clutch disengagement condition in which said first and second clutch members (31, 32) are not coupled for common rotation,
wherein a first one (21) of said gear elements (21, 22, 23) is connected to said transmission input shaft (2), a second one (23) of said gear elements (21, 22, 23) is connected to said second clutch member (32) and a third one (22) of said gear elements (21, 22, 23) is connected to said rotary member (12, 13) via a one way clutch (5), such that
- a first transmission speed range is selected when said brake (10) is in said brake engagement condition and said clutch (30) is in said clutch disengagement, and
- a second transmission speed range is selected when said clutch (30) is in said clutch engagement condition,
**characterized in that** said transmission system further comprises a transmission control apparatus (57, 58, 59, 60) including
- a clutch control means (58, 60) adapted to operate said clutch (30) between said clutch engagement condition and said clutch disengagement condition,
- a gear change predicting means (56) adapted to judge, whether said transmission system is in an operational state in which a gear change from said second transmission speed range to said first transmission speed range is imminent, and
- a brake control means (58, 59) adapted to operate said brake (10) between said brake engagement condition and said brake disengagement condition,
wherein said transmission control apparatus (58, 59, 60) is adapted such that, when it is judged that a gear change from the second to the first transmission speed range is imminent, the brake (10) is set to said brake engagement condition before said clutch (30) is set to said clutch disengagement condition.

2. Transmission system according to claim 1, **characterized in that** said first one (21) of said gear elements (21, 22, 23) is said ring gear (21), said second one (23) of said gear elements (21, 22, 23) is said planetary gear (23) and said third one (22) of said gear elements (21, 22, 23) is said sun gear (22).

3. Transmission system according to claim 1, **characterized in that** said first one of said gear elements is said sun gear, said second one of said gear elements is said planetary gear and said third one of said gear elements is said ring gear.

4. Transmission system according to one of the preceeding claims, **characterized in that** said gear change predicting means (56) judges, whether a gear change from said second transmission speed range to said first transmission speed range is imminent, based on the vehicle velocity (V) and the throttle valve opening rate (Θth).

5. Transmission system according to one claims 1 to 3, **characterized in that** said gear change predicting means (56) judges, whether a gear change from said second transmission speed range to said first transmission speed range is imminent, based on the engine revolving speed (Ne).

6. Transmission system according to one of the preceeding claims, **characterized in that** said transmission control apparatus (57, 58, 59, 60) further comprises a heavy load determining means (57) adapted to determine, whether an engine supplying driving force to said input shaft (2) is in a heavy load condition,
wherein said brake control means (58, 59) is further adapted to set said brake (10) to or maintain said brake (10) in said brake engagement condition, when it is determined that said engine is in said heavy load condition.

7. Transmission system according to claim 6, **characterized in that** said heavy load determining means (57) determines, whether an engine supplying driving force to said input shaft (2) is in said heavy load condition, based on the throttle valve opening rate (Θth) and the engine revolving speed (Ne).

8. Transmission system according to claim 1, **characterized in that** it comprises a plurality of planetary gear sets (20).

9. Method for conducting a gear change in a transmission system, comprising
- a planetary gear set (20), including a sun gear (22), a planetary gear (23), and a ring gear (21) as gear elements (21, 22, 23),
- a brake (10) having a stationary member (11, 14) and a rotary member (12, 13), said brake (10) being operable between a brake engagement condition in which said rotary member (12, 13) is stopped and a brake disengagement condition in which said rotary member (12, 13) is free to rotate,
- a clutch (30) having a first clutch member (31) fixedly connected to a transmission input shaft (2), and a second clutch member (32) fixedly connected to a transmission output shaft (3), said clutch (30) being operable between a clutch engagement condition in which said first and second clutch members (31, 32) are coupled for common rotation, and a clutch disengagement condition in which said first and second clutch members (31, 32) are not coupled for common rotation,
wherein a first one (21) of said gear elements (21, 22, 23) is connected to said transmission input shaft (2), a second one (23) of said gear elements (21, 22, 23) is connected to said second clutch member (32) and a third one (22) of said gear elements (21, 22, 23) is connected to said rotary member (12, 13) via a one way clutch (5), such that
- a first transmission speed range is selected when said brake (10) is in said brake engagement condition and said clutch (30) is in said clutch disengagement, and
- a second transmission speed range is selected when said clutch (30) is in said clutch engagement condition,
**characterized in that** the method comprises the following steps:
- judging, whether said transmission system is in an operational state in which a gear change from said second transmission speed range to said first transmission speed range is imminent (S6, S7, S8),
- if it is judged that such a gear change is imminent, then setting said brake (10) from said brake disengagement condition to said brake engagement condition (S9), and subsequently,
- setting said clutch from said clutch engagement state to said clutch disengagement state, in order to conduct said gear change.

10. Method according to claim 9, **characterized in that** it is judged that a gear change is imminent, when a vehicle speed (V) is lower than a first predetermined threshold speed (V1, V2) (S7, S8).

11. Method according to claim 10, **characterized in that** said predetermined threshold speed (V1, V2) is selected based on a throttle valve opening rate (Θth) (S6).

12. Method according to claim 9, **characterized in that** it is judged that a gear change is imminent, when a calculated vehicle speed (V), calculated on an engine revolving speed (Ne) and a gear ratio, is lower than a second predetermined threshold speed (Va) (S16) or when an actual vehicle speed (V) is lower than a second predetermined threshold speed (Va) (S17).

## Patentansprüche

1. Getriebesystem, umfassend:
- einen Planetengetriebesatz (20), umfassend ein Sonnenrad (22), ein Planetenrad (23) und ein Hohlrad (21) als Getriebeelemente (21, 22, 23),
- eine Bremse (10) mit einem stationären Element (11, 14) und einem Drehelement (12, 13), wobei die Bremse (10) betätigbar ist zwischen einem Bremseneingriffszustand, in welchem das Drehelement (12, 13) gestoppt ist, und einem Bremsen-Außereingriffszustand, in welchem das Drehelement (12, 13) frei drehen kann,
- eine Kupplung (30) mit einem ersten Kupplungselement (31), welches fest mit einer Getriebeeingangswelle (2) verbunden ist; und mit einem zweiten Kupplungselement (32), welches fest mit einer Getriebeausgangswelle (3) verbunden ist, wobei die Kupplung (30) betätigbar ist zwischen einem Kupplungseinrückzustand, in welchem das erste und das zweite Kupplungselement (31, 32) zur gemeinsamen Drehung gekoppelt sind, und einem Kupplungsausrückzustand, in welchem das erste und das zweite Kupplungselement (31, 32) nicht zur gemeinsamen Drehung gekoppelt sind,
wobei ein erstes Element (21) der Getriebeelemente (21, 22, 23) mit der Getriebeeingangswelle (2) verbunden ist, ein zweites Element (23) der Getriebeelemente (21, 22, 23) mit dem zweiten Kupplungselement (32) verbunden ist, und ein drittes Element (22) der Getriebeelemente (21, 22, 23) mit dem Drehelement (12, 13) über eine Einwegekupplung (5) verbunden ist, sodass:
- ein erster Getriebeübertragungsbereich ausgewählt ist, wenn die Bremse (10) sich in dem Bremseneingriffszustand befindet und die Kupplung (30) sich in dem Kupplungsausrückzustand befindet, und
- ein zweiter Getriebeübertragungsbereich ausgewählt ist, wenn sich die Kupplung (30) in dem Kupplungseinrückzustand befindet,
**dadurch gekennzeichnet, dass** das Getriebesystem ferner eine Getriebesteuer/regelvorrichtung (57, 58, 59, 60) aufweist, umfassend:
- ein Kupplungssteuer/regelmittel (58, 60), welches dazu ausgebildet ist, die Kupplung (30) zwischen dem Kupplungseinrückzustand und dem Kupplungsausrückzustand zu betätigen,
- ein Gangwechsel-Vorhersagemittel (56), welches dazu ausgebildet ist, zu beurteilen, ob sich das Getriebesystem in einem Betriebszustand befindet, in welchem ein Gangwechsel von dem zweiten Getriebeübertragungsbereich zu dem ersten Getriebeübertragungsbereich bevorsteht, und
- ein Bremsensteuer/regelmittel (58, 59), welches dazu ausgebildet ist, die Bremse (10) zwischen dem Bremseneingriffszustand und dem Bremsen-Außereingriffszustand zu betätigen,
wobei die Getriebesteuer/regelvorrichtung (58, 59, 60) derart ausgebildet ist, dass dann, wenn beurteilt wird, dass ein Gangwechsel von dem zweiten zu dem ersten Getriebeübertragungsbereich bevorsteht, die Bremse (10) in den Bremseneingriffszustand versetzt wird, bevor die Kupplung (30) in den Kupplungsausrückzustand versetzt wird.

2. Getriebesystem nach Anspruch 1, **dadurch gekennzeichnet, dass** das erste Element (21) der Getriebeelemente (21, 22, 23) das Hohlrad (21) ist, das zweite Element (23) der Getriebeelemente (21, 22, 23) das Planetenrad (23) ist und das dritte Element (22) der Getriebeelemente (21, 22, 23) das Sonnenrad (22) ist.

3. Getriebesystem nach Anspruch 1, **dadurch gekennzeichnet, dass** das erste Element der Getriebeelemente das Sonnenrad ist, das zweite Element der Getriebeelemente das Planetenrad ist und das dritte Element der Getriebeelemente das Hohlrad ist.

4. Getriebesystem nach einem der vorhergehenden Ansprüche, **dadurch gekennzeichnet, dass** das Gangwechsel-Vorhersagemittel (56) auf Grundlage der Fahrzeuggeschwindigkeit (V) und der Drosselventilöffnungsrate (θth) beurteilt, ob ein Gangwechsel vom zweiten Getriebeübertragungsbereich zum ersten Getriebeübertragungsbereich bevorsteht.

5. Getriebesystem nach einem der Ansprüche 1 bis 3, **dadurch gekennzeichnet, dass** das Gangwechsel-Vorhersagemittel (56) auf Grundlage der Maschinendrehzahl (Ne) beurteilt, ob ein Gangwechsel von dem zweiten Getriebeübertragungsbereich zum ersten Getriebeübertragungsbereich bevorsteht.

6. Getriebesystem nach einem der vorhergehenden Ansprüche, **dadurch gekennzeichnet, dass** die Getriebesteuer/regelvorrichtung (57, 58, 59, 60) ferner ein Hochlastbestimmungsmittel (57) umfasst, welches dazu ausgebildet ist, zu bestimmen, ob sich eine Maschine, welche Antriebskraft an die Eingangswelle (2) liefert, in einem Hochlastzustand befindet,
wobei das Bremsensteuer/regelmittel (58, 59) ferner dazu ausgebildet ist, die Bremse (10) in den Bremseneingriffszustand zu versetzen oder in diesem zu halten, wenn bestimmt wird, dass sich die Maschine in dem Hochlastzustand befindet.

7. Getriebesystem nach Anspruch 6, **dadurch gekennzeichnet, dass** das Hochlastbestimmungsmittel (57) auf Grundlage der Drosselventilöffnungsrate (θth) und der Maschinendrehzahl (Ne) bestimmt, ob eine Maschine, welche Antriebskraft an die Eingangswelle (2) liefert, sich in dem Hochlastzustand befindet.

8. Getriebesystem nach Anspruch 1, **dadurch gekennzeichnet, dass** es eine Mehrzahl von Planetengetriebesätzen (20) umfasst.

9. Verfahren zum Ausführen eines Gangwechsels in einem Getriebesystem, umfassend:
- einen Planetengetriebesatz (20), umfassend ein Sonnenrad (22), ein Planetenrad (23) und ein Hohlrad (21) als Getriebeelemente (21, 22, 23),
- eine Bremse (10) mit einem stationären Element (11, 14) und einem Drehelement (12, 13), wobei die Bremse (10) betätigbar ist zwischen einem Bremseneingriffszustand, in welchem das Drehelement (12, 13) gestoppt ist, und einem Bremsen-Außereingriffszustand, in welchem das Drehelement (12, 13) frei drehen kann,
- eine Kupplung (30) mit einem ersten Kupplungselement (31), welches fest mit einer Getriebeeingangswelle (2) verbunden ist, und mit einem zweiten Kupplungselement (32), welches fest mit einer Getriebeausgangswelle (3) verbunden ist, wobei die Kupplung (30) betätigbar ist zwischen einem Kupplungseinrückzustand, in welchem das erste und das zweite Kupplungselement (31, 32) zur gemeinsamen Drehung gekoppelt sind, und einem Kupplungsausrückzustand, in welchem das erste und das zweite Kupplungselement (31, 32) nicht zur gemeinsamen Drehung gekoppelt sind,
wobei ein erstes Element (21) der Getriebeelemente (21, 22, 23) mit der Getriebeeingangswelle (2) verbunden ist, ein zweites Element (23) der Getriebeelemente (21, 22, 23) mit dem zweiten Kupplungselement (32) verbunden ist, und ein drittes Element (22) der Getriebeelemente (21, 22, 23) mit dem Drehelement (12, 13) über eine Einwegekupplung (5) verbunden ist, sodass:
- ein erster Getriebeübertragungsbereich ausgewählt ist, wenn die Bremse (10) sich in dem Bremseneingriffszustand befindet und die Kupplung (30) sich in dem Kupplungsausrückzustand befindet, und
- ein zweiter Getriebeübertragungsbereich ausgewählt ist, wenn sich die Kupplung (30) in dem Kupplungseinrückzustand befindet,
**dadurch gekennzeichnet, dass** das Verfahren die folgenden Schritte umfasst:
- Beurteilen, ob sich das Getriebesystem in einem Betriebszustand befindet, in welchem ein Gangwechsel von dem zweiten Getriebeübertragungsbereich zu dem ersten Getriebeübertragungsbereich bevorsteht (S6, S7, S8),
- dann, wenn beurteilt, wird dass ein solcher Gangwechsel bevorsteht, Versetzen der Bremse (10) von dem Bremsen-Außereingriffszustand in den Bremseneingriffszustand (S9), und nachfolgend
- Versetzen der Kupplung von dem Kupplungseinrückzustand in den Kupplungsausrückzustand, um den Gangwechsel auszuführen.

10. Verfahren nach Anspruch 9, **dadurch gekennzeichnet, dass** beurteilt wird, dass ein Gangwechsel bevorsteht, wenn eine Fahrzeuggeschwindigkeit (V) niedriger als eine erste vorbestimmte Schwellengeschwindigkeit (V1, V2) ist (S7, S8).

11. Verfahren nach Anspruch 10, **dadurch gekennzeichnet, dass** die vorbestimmte Schwellengeschwindigkeit (V1, V2) auf Grundlage einer Drosselventilöffnungsrate (θth) gewählt wird (S6).

12. Verfahren nach Anspruch 9, **dadurch gekennzeichnet, dass** beurteilt wird, dass ein Gangwechsel bevorsteht, wenn eine berechnete Fahrzeuggeschwindigkeit (V), welche anhand einer Maschinendrehzahl (Ne) und eines Übertragungsverhältnisses berechnet wird, niedriger als eine zweite vorbestimmte Schwellengeschwindigkeit (Va) ist (S16) oder wenn eine tatsächliche Fahrzeuggeschwindigkeit (V) niedriger als eine zweite vorbestimmte Schwellengeschwindigkeit (Va) ist (S17).

## Revendications

1. Système de transmission, comprenant
- un ensemble d'engrenage planétaire (20), comprenant un pignon central (22), un pignon satellite (23), et un pignon annulaire (21) en tant qu'éléments d'engrenage (21,22,23),
- un frein (10) possédant un élément fixe (11,14) et un élément rotatif (12,13), ledit frein (10) étant actionnable entre un état d'engagement de frein dans lequel ledit élément rotatif (12,13) est stoppé et un état de dégagement de frein dans lequel ledit élément rotatif (12,13) est libre de tourner,
- un embrayage (30) possédant un premier élément d'embrayage (31) fixé à demeure à un arbre d'entrée de transmission (2), et un second élément d'embrayage (32) fixé à demeure à un arbre de sortie de transmission (3), ledit embrayage (30) étant actionnable entre un état d'engagement d'embrayage dans lequel lesdits premier et second éléments d'embrayage (31,32) sont couplés en vue d'une rotation commune, et un état de dégagement d'embrayage dans lequel lesdits premier et second éléments d'embrayage (31,32) ne sont pas couplés en vue d'une rotation commune,
dans lequel un premier (21) desdits éléments d'engrenage (21,22,23) est connecté audit arbre d'entrée de transmission (2), un second (23) desdits éléments d'engrenage (21,22,23) est connecté audit second élément d'embrayage (32) et un troisième (22) desdits éléments d'engrenage (21,22,23) est connecté audit élément rotatif (12,13) par l'intermédiaire d'un embrayage unidirectionnel (5), de telle sorte que
- une première plage de vitesse de transmission soit sélectionnée lorsque ledit frein (10) se trouve dans ledit état d'engagement de frein et ledit embrayage (30) se trouve dans ledit état de dégagement d'embrayage ,et
- une seconde plage de vitesse de transmission soit sélectionnée lorsque ledit embrayage (30) se trouve dans ledit état d'engagement d'embrayage,
**caractérisé en ce que** ledit système de transmission comprend en outre un appareil de commande de transmission (57,58,59,60) comprenant
- un moyen de commande d'embrayage (58,60) adapté pour actionner ledit embrayage (30) entre ledit état d'engagement d'embrayage et ledit état de dégagement d'embrayage,
- un moyen de prédiction de changement de vitesse (56) adapté pour évaluer si ledit système de transmission se trouve dans un état de fonctionnement dans lequel une variation de ladite seconde plage de vitesse de transmission à ladite première plage de vitesse de transmission est imminent, et
- un moyen de commande de frein (58,59) adapté pour actionner ledit frein (10) entre ledit état d'engagement de frein et ledit état de dégagement de frein,
dans lequel ledit appareil de commande de transmission (58,59,60) est adapté de telle sorte que lorsqu'il est estimé qu'un changement de vitesse de la seconde à la première plage de vitesse de transmission est imminent, le frein (10) est placé dans ledit état d'engagement de frein avant que ledit embrayage (30) soit placé dans ledit état de dégagement d'embrayage.

2. Système de transmission selon la revendication 1, **caractérisé en ce que** ledit premier (21) desdits éléments d'engrenage (21,22,23) est ledit pignon annulaire (21), ledit second (23) desdits éléments d'engrenage (21,22,23) est ledit pignon satellite (23) et ledit troisième (22) desdits éléments d'engrenage (21,22,23) est ledit pignon central (22).

3. Système de transmission selon la revendication 1, **caractérisé en ce que** ledit premier des éléments d'engrenage est ledit pignon central, ledit second desdits éléments d'engrenage est ledit pignon satellite et ledit troisième desdits éléments d'engrenage est ledit pignon annulaire.

4. Système de transmission selon l'une des revendications précédentes, **caractérisé en ce que** ledit moyen de prédiction de changement de vitesse (56) évalue si un changement de vitesse de ladite seconde plage de vitesse de transmission à ladite première plage de vitesse de transmission est imminent, en fonction de la vitesse du véhicule (V) et du degré d'ouverture de la soupape des gaz (Θth).

5. Système de transmission selon l'une des revendications 1 à 3, **caractérisé en ce que** ledit moyen de prédiction de changement de vitesse (56) évalue si un changement de vitesse de ladite seconde plage de vitesse de transmission à ladite première plage de vitesse de transmission est imminent, en fonction de la vitesse de rotation du moteur (Ne).

6. Système de transmission selon une des revendications précédentes, **caractérisé en ce que** ledit appareil de commande de transmission (57,58,59,60) comprend en outre un moyen de détermination de charge importante (57) adapté pour déterminer si un moteur délivrant une force d'entraînement audit arbre d'entrée (2) se trouve dans un état de charge importante,
dans lequel ledit moyen de commande de frein (58,59) est en outre adapté pour placer ledit frein (10) ou maintenir ledit frein (10) dans ledit état d'engagement de frein, lorsqu'il est déterminé que ledit moteur se trouve dans ledit état de charge importante.

7. Système de transmission selon la revendication 6, **caractérisé en ce que** ledit moyen de détermination de charge importante (57) détermine si un moteur délivrant une force d'entraînement audit arbre d'entrée (2) se trouve dans ledit état de charge importante, en fonction du degré d'ouverture de la soupape des gaz (Θth) et de la vitesse de rotation du moteur (Ne).

8. Système de transmission selon la revendication 1, **caractérisé en ce qu'**il comporte une pluralité d'ensembles d'engrenages planétaires (20).

9. Procédé de réalisation d'un changement de vitesse dans un système de transmission, comprenant
- un ensemble d'engrenage planétaire (20), comprenant un pignon central (22), un pignon satellite (23), et un pignon annulaire (21) en tant qu'éléments d'engrenage (21,22,23),
- un frein (10) possédant un élément fixe (11,14) et un élément rotatif (12,13), ledit frein (10) étant actionnable entre un état d'engagement de frein dans lequel ledit élément rotatif (12,13) est stoppé et un état de dégagement de frein dans lequel ledit élément rotatif (12,13) est libre de tourner,
- un embrayage (30) possédant un premier élément d'embrayage (31) fixé à demeure à un arbre d'entrée de transmission (2), et un second élément d'embrayage (32) fixé à demeure à un arbre de sortie de transmission (3), ledit embrayage (30) étant actionnable entre un état d'engagement d'embrayage dans lesdits premier et second éléments d'embrayage (31,32) sont couplés en vue d'une rotation commune, et un état de dégagement d'embrayage dans lequel lesdits premier et second éléments d'embrayage (31,32) ne sont pas couplés en vue d'une rotation commune,
dans lequel un premier (21) desdits éléments d'engrenage (21,22,23) est connecté audit arbre d'entrée de transmission (2), un second (23) desdits éléments d'engrenage (21,22,23) est connecté au second élément d'embrayage (32) et un troisième (22) desdits éléments d'engrenage (21,22,23) est connecté audit élément rotatif (12,13) par l'intermédiaire d'un embrayage unidirectionnel (5), de telle sorte que
- une première plage de vitesse de transmission est sélectionnée lorsque ledit frein (10) se trouve dans ledit état d'engagement de frein et ledit embrayage (30) se trouve dans ledit état de dégagement d'embrayage, et
- une seconde plage de vitesse de transmission est sélectionnée lorsque ledit embrayage (30) se trouve dans ledit état d'engagement d'embrayage,
**caractérisé en ce que** le procédé comprend les étapes suivantes:
- évaluation si ledit système de transmission se trouve dans un état de fonctionnement dans lequel un changement de vitesse de ladite seconde plage de vitesse de transmission à ladite première plage de vitesse de transmission est imminent (S6,S7,S8),
- s'il est estimé qu'un tel changement de vitesse est imminent, placement dudit frein (10) dudit état de dégagement de frein dans ledit état d'engagement de frein (S9), et ensuite,
- placement dudit embrayage dudit état d'engagement d'embrayage dans ledit état de dégagement d'embrayage, afin d'effectuer ledit changement de vitesse.

10. Procédé selon la revendication 9, **caractérisé en ce qu'**il est estimé qu'un changement de vitesse est imminent, lorsqu'une vitesse du véhicule (V) est inférieure à une première vitesse seuil prédéterminée (V1,V2) (S7,S8).

11. Procédé selon la revendication 10, **caractérisé en ce que** ladite vitesse seuil prédéterminée (V1,V2) est sélectionnée en fonction du degré d'ouverture de la soupape des gaz (Θth) (S6).

12. Procédé selon la revendication 9, **caractérisé en ce qu'**on estime qu'un changement de vitesse est imminent lorsqu'une vitesse de véhicule calculée (V), calculée en fonction d'une vitesse de rotation du moteur (Ne) et d'un rapport d'engrenage, est inférieure à une seconde vitesse de seuil prédéterminée (Va) (S16) ou lorsqu'une vitesse de véhicule réelle (V) est inférieure à une seconde vitesse de seuil prédéterminée (Va)(S17).
